(19) Europäisches Patentamt
European Patent Office
Office européen des brevets

(11) **EP 1 437 255 B1**

(12) **EUROPEAN PATENT SPECIFICATION**

(45) Date of publication and mention
of the grant of the patent:
**24.01.2007   Bulletin 2007/04**

(51) Int Cl.:
***B60W 10/04*** *(2006.01)*      ***B60W 10/06*** *(2006.01)*
***B60W 30/18*** *(2006.01)*

(21) Application number: **03030026.3**

(22) Date of filing: **30.12.2003**

(54) **Control apparatus for automatic clutch mechanism**

Steuerungssystem einer automatischen Kupplung

Dispositif de commande d'un embrayage automatique

(84) Designated Contracting States:
**CZ DE FR GB IT**

(30) Priority: **10.01.2003   JP 2003004000**

(43) Date of publication of application:
**14.07.2004   Bulletin 2004/29**

(73) Proprietor: **Toyota Jidosha Kabushiki Kaisha
Toyota-shi, Aichi-ken, 471-8571 (JP)**

(72) Inventors:
• **Watanabe, Hideo
Toyota Jidosha K.K.
Aichi-ken, 471-8571 (JP)**
• **Nishizawa, Jun
Toyota Jidosha K.K.
Aichi-ken, 471-8571 (JP)**

• **Murakami, Kuniaki
Toyota Jidosha K.K.
Aichi-ken, 471-8571 (JP)**
• **Otsubo, Hideaki
Toyota Jidosha K.K.
Aichi-ken, 471-8571 (JP)**
• **Inoue, Takashi
Toyota Jidosha K.K.
Aichi-ken, 471-8571 (JP)**

(74) Representative: **Kuhnen & Wacker
Patent- und Rechtsanwaltsbüro
Prinz-Ludwig-Strasse 40A
85354 Freising (DE)**

(56) References cited:
**DE-A1- 10 040 167      DE-B1- 1 455 513
US-A- 4 623 052      US-A- 4 718 525
US-A1- 2002 086 769      US-B1- 6 206 803**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

1. Field of the Invention

The invention relates to a control apparatus for an automatic clutch mechanism which permits/interrupts power transmission from a power plant.

2. Description of the Related Art

In order to permit/interrupt power transmission from a power plant such as an internal combustion engine to a transmission, a clutch is provided between the power plant and the transmission. Generally, the clutch includes a flywheel which is attached to an output shaft of the power plant, and a clutch disk which is attached to an input shaft of the transmission, When the clutch disk is pressed to the flywheel, a frictional force is generated between the clutch disk and the flywheel, the clutch is engaged, and then power is transmitted from the power plant to the transmission.

Meanwhile, when the pressing force is reduced, the frictional force is reduced gradually, and the clutch disk and the flywheel are separated from each other. Then, the clutch is disengaged, and power transmission from the power plant to the transmission is interrupted.

Generally, such a clutch operation is performed by a driver through a clutch pedal operation. However, in recent years, the clutch operation can be automatically performed by an automatic clutch mechanism including an actuator or the like. In the automatic clutch mechanism, for example, when an operation state of an internal combustion engine, which is an example of a power plant, is an idling state, the clutch is disengaged. When the engine speed exceeds the idling speed, the clutch disk is gradually pressed to the flywheel. When a vehicle is started normally, for example, when the vehicle is stopped on a flatland and then started, by controlling the automatic clutch mechanism in the above-mentioned manner, it is possible to start the vehicle smoothly.

Meanwhile, when the clutch is engaged in the above-mentioned manner even in the case where a load placed on the vehicle during the start of the vehicle (hereinafter, referred to as the "vehicle start") is high, for example, in the case where a request for a snap start has been made, in the case where the vehicle is stopped on an inclined road, or in the case where a laden weight has increased, engagement of the clutch is started at an engine speed at which required engine output torque cannot be obtained sufficiently. Accordingly, there is a possibility that it is difficult to start the vehicle in an intended manner.

In order to address the problem, Japanese Patent Laid-Open Publication No. 2001-107993, corresponding to German Patent Application DE 100 40 167 Al, claiming the same priority of document GB 9920802, showing the features of the preamble of claim 1, discloses a control apparatus for a control apparatus for an automatic clutch mechanism, which enables a start of engagement of the clutch not only automatically but also by a driver. According to the control apparatus, several processes need to be performed by the driver such that the start of the clutch engagement is delayed until appropriate timing. Also, the delay state can be cancelled through an operation performed by the driver. According to the vehicle on which the control apparatus is mounted, in order to start the vehicle smoothly even when the load placed on the vehicle is high, initially, the start of the clutch engagement is delayed until the appropriate timing through several operations performed by the driver. Then, after the engine speed is adjusted to a predetermined speed by the driver, the delay state is cancelled. Thus, it is possible to engage the clutch at an engine speed reflecting the intention of the driver.

In the above-mentioned control apparatus, when the vehicle is started when the load placed on the vehicle is high, the driver needs to perform several operations. Therefore, the load placed on the driver due to performing the several operations is high and cannot be ignored.

SUMMARY OF THE INVENTION

The invention is made in the light of the above-mentioned circumstance. It is an object of the invention to provide a control apparatus for an automatic clutch mechanism, which enables a vehicle start with a simple operation even when a load placed on the vehicle is high.
This object is achieved by the features of claim 1.

According to an aspect of the invention, there is provided a control apparatus for an automatic clutch mechanism which permits/interrupts power transmission from a power plant, wherein a reference engine speed at which engagement of the automatic clutch mechanism is started is changed based on an accelerator operation amount or a degree of a change in the accelerator operation amount.

Generally, as the load placed on the vehicle during the vehicle start increases, the accelerator operation amount and the degree of change in the accelerator operation amount increase. However, according to the above-mentioned control apparatus, the reference engine speed at which engagement of the automatic clutch mechanism is started is changed based on the accelerator operation amount or the degree of the change in the accelerator operation amount. Accordingly, it is possible to start the vehicle smoothly only through the operation of the accelerator, even when the load placed on the vehicle is high. Therefore, it is possible to start the vehicle with a simple operation even when the load placed on the vehicle is high.

According to this aspect of the invention, there is provided a control apparatus which controls an automatic clutch mechanism that permits/interrupts power transmission from a power plant, and which starts engagement of the automatic clutch mechanism when a rotational speed of the clutch mechanism on the power plant side becomes equal to or higher than a predetermined reference engine speed during the vehicle start. In the above-mentioned control apparatus, when an accelerator operation amount or a degree of a change in the accelerator operation amount during the vehicle start is equal to or larger than a predetermined value, the reference engine speed is made higher than the reference engine speed when the accelerator operation amount or the degree of change in the accelerator operation amount is smaller than the predetermined value.

Generally, when the load placed on the vehicle during the vehicle start is high, the accelerator operation amount and the degree of the change in the accelerator operation amount are larger than those when the load placed on the vehicle during the vehicle start is low. However, according the above-mentioned control apparatus, when the accelerator operation amount or the degree of the change in the accelerator operation amount becomes equal to or larger than the predetermined value during the vehicle start, that is, when the load placed on the vehicle during the vehicle start is high, the reference engine speed is increased. Therefore, engagement of the automatic clutch mechanism is started in the state where the rotational speed of the automatic clutch mechanism on the power plant side is high. As a result, it possible to start the vehicle according to the load placed on the vehicle. It is possible to start the vehicle smoothly when the load placed on the vehicle is high only through the accelerator operation. Therefore, it is possible to start the vehicle smoothly with a simple operation even when the load placed on the vehicle is high.

The increased reference engine speed is decreased after the rotational speed of the automatic clutch mechanism on the power plant side becomes equal to or higher than the increased reference engine speed, and engagement of the automatic clutch mechanism is started.

The driving torque to be transmitted from the power plant to the driving wheel side of the automatic clutch mechanism is a total sum of the output torque of the power plant and torque due to an inertia force of the automatic clutch mechanism on the power plant side. The more abruptly the rotational speed of the automatic clutch mechanism on the power plant side is decreased, the larger the amount of the inertia force to be transmitted to the driving wheel side of the automatic clutch mechanism becomes. However, according to the above-mentioned control apparatus, after engagement of the automatic clutch mechanism is started, the increased reference engine speed is decreased. Due to the decrease in the reference engine speed, the rotational speed of the automatic clutch mechanism on the power plant side is decreased. Therefore, the inertia force is increased, and can be effectively used as a driving force. Accordingly, it is possible to increase the driving torque to be transmitted from the power plant to the driving wheel side of the automatic clutch mechanism during the vehicle start. As a result, it is possible to start the vehicle smoothly even when the load placed on the vehicle is high.

It is also preferable that the decrease in the increased reference engine speed be started when an increase rate of the rotational speed of the automatic clutch mechanism on the power plant side becomes lower than the predetermined value after engagement of the automatic clutch mechanism is started.

According to the above-mentioned control apparatus, the reference engine speed is decreased after the state is realized where the increase in the rotational speed of the automatic clutch mechanism on the power plant side is completed and the rotational speed is high. Therefore, it is possible to effectively use the inertia force as the driving force. As a result, it is possible to appropriately increase the driving force.

It is also preferable that the decrease in the increased reference engine speed is started when the rotational speed of the automatic clutch mechanism on the power plant side becomes equal to or higher than the predetermined value after engagement of the automatic clutch mechanism is started.

When the rotational speed of the automatic clutch mechanism on the power plant side is excessively increased, the inertia force to be added as the driving force is also increased, which raises a possibility that the driving force is excessively increased. However, according to the above-mentioned control apparatus, when the rotational speed of the automatic clutch mechanism on the power plant side becomes equal to or higher than the predetermined speed, the reference engine speed is decreased. Accordingly, it is possible to suppress an excessive increase in the inertia force.

It is also preferable that the increased reference engine speed be decreased gradually.

As mentioned above, the more abruptly the rotational speed of the automatic clutch mechanism on the power plant side is decreased, the larger the amount of the inertia force to be transmitted to the driving wheel side of the automatic clutch mechanism becomes. However, when the reference engine speed is decreased abruptly, the inertia force to be added to the driving force is increased excessively, which raises a possibility that idle running of the driving wheels or the like occurs. However, according to the above-mentioned control apparatus, the increased reference engine speed is decreased gradually. Therefore, it is possible to suppress an excessive increase in the inertia force.

It is also preferable that the degree of the decrease in the increased reference engine speed be changed according to the degree of the load placed on the vehicle during the vehicle start.

According to the above-mentioned control apparatus, the degree of the decrease in the reference engine speed, which is related to the amount of the inertia force to be added to the driving force, is changed according to the load placed on the vehicle. Therefore, it is possible to appropriately obtain the driving force corresponding to the load placed on the vehicle.

It is also preferable that the degree of the decrease in the reference engine speed be the decrease rate of the reference engine speed.

According to the above-mentioned control apparatus, the degree of the decrease in the reference engine speed which is related to the amount of the inertia force to be added to the driving force, that is the decrease rate of the reference engine speed, is changed according to the load placed on the vehicle. Accordingly, it is possible to appropriately obtain the driving force corresponding to the load placed on the vehicle.

It is also preferable that the degree of the decrease in the reference engine speed be the amount of the decrease in the reference engine speed.

Generally, as the amount of the decrease in the rotational speed of a rotor increases, the amount of the inertia force to be added to the driving force increases. However, according to the above-mentioned control apparatus, the amount of the decrease in the reference engine speed, which is related to the amount of the inertia force to be added to the driving force, is changed according to the load placed on the vehicle. Accordingly, it is possible to appropriately obtain the driving force corresponding to the load placed on the vehicle.

It is also preferable that the reference engine speed be set to a value near the idling speed, and the increased reference engine speed be decreased until the reference engine speed becomes equal to the original reference engine speed which has not increased.

According to the above-mentioned control apparatus, even when the engine speed is decreased by decreasing the increased reference engine speed to the original reference engine speed, there is no possibility that the engine speed becomes lower than the speed near the idling speed. Accordingly, it is possible to maintain the stable engine operation state.

It is also preferable that the reference engine speed be increased gradually.

Normally, when the vehicle is started, engagement of the automatic clutch mechanism is started before the increase in reference engine speed is started. When the reference engine speed is increased during such a normal vehicle start, the reference engine speed temporarily exceeds the rotational speed of the automatic clutch mechanism on the power plant side. Therefore, the automatic clutch mechanism is disengaged. If the automatic clutch mechanism is abruptly disengaged, power transmission from the power plant is rapidly interrupted; which raises a possibility that a deceleration shock occurs in the vehicle. However, according to the above-mentioned control apparatus, since the reference engine speed is gradually increased, power transmission from the power plant is gradually interrupted. Accordingly, it is possible to appropriately suppress the occurrence of the deceleration shock in the vehicle due to the change in the load placed on the vehicle during the start.

It is also preferable that the increase rate of the reference engine speed to be increased be changed according to the load placed on the vehicle during the vehicle start.

As mentioned above, by gradually increasing the reference engine speed, it is possible to suppress the occurrence of the deceleration shock in the vehicle due to the change in the load placed on the vehicle during the vehicle start. Namely, as the increase rate of the reference engine speed is decreased, the deceleration shock can be further decreased. However, as the increase rate of the reference engine speed is decreased, power transmission from the power plant is interrupted more slowly. Accordingly, the increase rate of the engine speed is decreased, and there is a possibility that the vehicle cannot be started appropriately when the load placed on the vehicle is high. However, according to the above-mentioned control apparatus, the increase rate of the reference engine speed is changed according to the load placed on the vehicle during the vehicle start. Therefore, it is possible to appropriately start the vehicle according to the load placed on the vehicle.

It is also preferable that the amount of the increase in the reference engine speed to be increased be changed according to the load placed on the vehicle during the vehicle start.

As the reference engine speed is increased, the rotational speed of the automatic clutch mechanism on the power plant side when engagement is started is also increased, and the inertia force is increased as well. However, according to the above-mentioned control apparatus, the amount of the increase in the reference engine speed, which is related to the amount of the inertia force to be added to the driving force, is changed according to the load placed on the vehicle. Accordingly, it is possible to appropriately obtain the driving force corresponding to the load placed on the vehicle.

It is also preferable that the accelerator operation amount or the degree of the change in the accelerator operation amount be used as the load placed on the vehicle.

As the accelerator operation amount or the degree of the change in the acceleration amount during the vehicle start is increased, the load placed on the vehicle during the vehicle start is increased. However, according to the above-mentioned control apparatus, the accelerator operation amount or the degree of change in the accelerator operation amount, which is correlated with the load placed on the vehicle, is used as the load placed on the vehicle. Accordingly, it is possible to appropriately start the vehicle according to the load placed on the vehicle.

It is also preferable that at least one of the inclination of the road, and the weight of the vehicle be used as the load placed on the vehicle, in addition to the accelerator operation amount or the degree of change in the accelerator operation amount.

When the vehicle stopped on a road whose inclination is large is started, the load placed on the vehicle is higher than that when the vehicle stopped on a flatland is started. The load placed on the vehicle when the vehicle whose laden weight has increased is started is higher than that when the vehicle whose laden weight has not increased is started. However, according to the above-mentioned control apparatus, at least one of the inclination of the road, and the weight of the vehicle is used as the load placed on the load, in addition to the accelerator operation amount or the degree of change in the accelerator operation mount. Therefore, it is possible to further appropriately start the vehicle according to the load placed on the vehicle.

BRIEF DESCRIPTION OF THE DRAWINGS

The above-mentioned exemplary embodiment and other exemplary embodiments, objects, features, advantages, technical and industrial significance of this invention will be better understood by reading the following detailed description of the exemplary embodiments of the invention, when considered in connection with the accompanying drawings, in which:

FIG. 1 is a diagram schematically showing a configuration of a vehicle to which an embodiment of the invention is applied;

FIG. 2 is a section view schematically showing a configuration of a clutch which is mounted on the vehicle;

FIG. 3 is a graph schematically showing a configuration of a map used for calculating target clutch torque;

FIG. 4 is a graph schematically showing a configuration of a map used for calculating a target stroke amount;

FIG. 5 is a timing chart for describing effect of clutch control during a normal start;

FIG. 6 is a flowchart showing a routine of a snap start control process;

FIG. 7 is a flowchart showing a routine of a reference engine speed addition process;

FIG. 8 is a flowchart showing a routine of an engine flare determination process;

FIG. 9 is a flowchart showing a routine of a reference engine speed subtraction process;

FIG. 10 is a graph schematically showing a configuration of a map used for calculating a reference value correction subtraction amount DB;

FIG. is a timing chart for describing effect when an accelerator pedal is fully depressed in one stroke;

FIG. 12 is a timing chart for describing effect when the accelerator pedal is depressed in an amount corresponding to that during a normal start, and then is fully depressed rapidly;

FIG. 13 is a graph showing a change in the reference engine speed in a modified example of the embodiment; and

FIG. 14 is a graph schematically showing a configuration of a map used for calculating an addition amount in the modified example of the embodiment.

DETAILED DESCRIPTION OF THE PREFERRED EMBODIMENTS

In the following description and the accompanying drawings, the invention will be described in more detail in terms of exemplary embodiments. Hereafter, an embodiment of a control apparatus for an automatic clutch mechanism according to the invention will be described with reference to accompanying drawings.

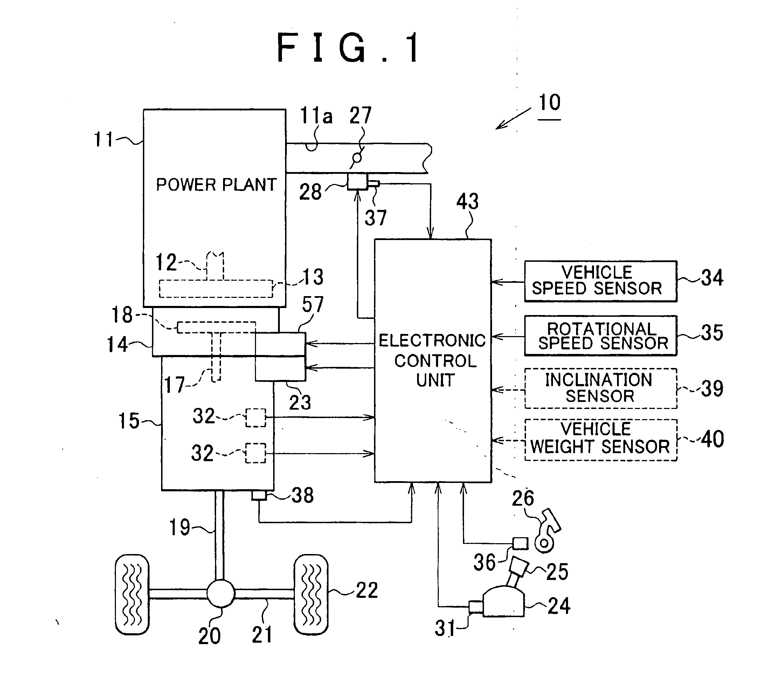

First, a configuration of a vehicle to which the embodiment is applied will be described with reference to FIG. 1. As shown in FIG. 1, an internal combustion engine as a power plant 11 is mounted on a vehicle 10.

A throttle valve 27 is provided in an intake passage 11a of the power plant 11. The throttle valve 27 is opened/closed due to the driving of a motor 28 coupled with the throttle valve 27, and an amount of air to be supplied to the power plant 11 is adjusted according to an opening of the throttle valve 27. In the power plant 27, an air-fuel mixture is burned, and a crankshaft 12, which is an output shaft of the power plant 27, rotates.

A flywheel 13 is attached to the crankshaft 12 so as to be rotatable integrally with the crankshaft 12. A transmission 15 is connected to the flywheel via a clutch 14. The clutch 14 is used for transmitting rotational torque of the crankshaft 12 to the transmission 15, and for interrupting the transmission of the torque. The concrete configuration of the clutch 14 will be described later in detail.

The transmission 15 has a configuration similar to that of a general manual transmission such as a parallel gear type transmission having forward five speeds and reverse one speed. The transmission 15 includes an input shaft 17 and an output shaft. The input shaft 17 is coupled with a clutch disk 18 of the clutch 14. The rotation of the output shaft is transmitted to driving wheels 22 via a drive shaft 19, a differential gear 20, an axle 21, and the like.

The transmission 15 includes plural sets of shifting gears (shift speeds) and plural sleeves, in addition to the input shaft 17 and the output shaft. An actuator 23 for a transmission including an electric motor and the like is provided in order to change the shift speed of the transmission 15. Due to the actuation of the actuator 23 for a transmission, a sleeve is moved in the axial direction of the output shaft in the transmission 15. Due to the movement of the sleeve, the gears are engaged with each other, and power is transmitted in a certain shifting gear set. Also, when the sleeves are moved to a neutral position in the shifting gear set, power transmission is interrupted.

A shifting device 24 is provided near a driving seat of the vehicle 10. In the shifting device 24, a shift lever 25 is provided so as to be movable along a shift gate. Shifting positions such as a reverse (R) position, a neutral (N) position, a sequential (S) position, a drive (D) position are set in the shift gate, and the driver can move the shift lever 25 to an intended shifting position.

Hereafter, a description will be made on each state where each of the above-mentioned shifting positions is selected, and the operation state of the transmission 15 in the state. The position "N" is selected when connection between the input shaft 17 and the output shaft of the transmission 15 is interrupted. When the shift lever 25 is operated so as to be at the position "N", the transmission 15 is switched to a state where power transmission between the shifting gears is interrupted.

The position "R" is selected when the vehicle 10 is backed up. When the shift lever 25 is operated so as to be at the position "R", the shift speed of the transmission 15 is switched to the reverse shift speed.

The position "S" is selected when the shifting operation concerning the plural forward speeds is performed by the driver. A position "+" is provided on one side of the position "S", and a position "-" is provided on the other side of the position "S". The shift lever 25 is operated so as to be at the position "+" when the shift speed is changed to a higher speed, and the shift lever 25 is operated so as to be at the position "-" when the shift speed is changed to a lower speed. In the case where the shift lever 25 is at the position "S", when the shift lever 25 is operated so as to be at the position "+" or the position "-" using the position "S" as the center position, plural forward shift speeds of the transmission 15 are changed to a higher speed or to a lower speed. The position "+" is a position for shifting to a higher speed. Each time the shift lever 25 is operated so as to be at the position "+", the shift speed is changed to a higher speed by one speed, that is, the shift speed is changed to a higher speed side where a shifting ratio is small by one speed. On the other hand, the position "-" is a position for shifting to a lower speed. Each time the shift lever 25 is operated so as to be at the position "-", the shift speed is changed to a lower speed by one speed, that is, the shift speed is changed to a lower speed side where a shifting ratio is large by one speed.

The position "D" is selected when the above-mentioned shifting operation is not performed by the driver through the operation of the shift lever 25, and the shifting operation is automatically performed according to the operation state of the vehicle 10 and the depressing amount of the accelerator pedal 26. When the position "D" is selected, the transmission 15 functions as a so-called automatic transmission.

Various sensors for detecting the operation state of the vehicle 10 and the operation state of the power plant 11 are provided in the vehicle 10. For example, a shifting position sensor 31 for detecting a position of the shift lever 25 is provided in the shifting device 24. A stroke sensor 32 for detecting a shift direction of a gear and a stroke sensor 33 for detecting a select direction of the gear are provided in the transmission 15. The stroke sensors 32, 33 detect the selected shift speed of the transmission 15. In addition, a vehicle speed sensor 34 for detecting a running speed (a vehicle speed SPD) of the vehicle 10, and a rotational speed sensor 35 for detecting a rotational speed (an engine speed NE) of the crankshaft 12 are provided. Further, an accelerator opening sensor 30 for detecting a depressing amount of the accelerator 26 (an accelerator opening ACCP) is provided near the accelerator pedal 26.

Further, a throttle sensor 37 for detecting an opening of the throttle valve 27 (a throttle opening TA), a rotational speed sensor 38 for detecting a rotational speed (an input rotational speed N1) of the input shaft 17 of the transmission 15, and the like are provided.

Meanwhile, the apparatus according to the embodiment includes an electronic control unit (hereinafter, referred to as an "ECU") 43. The ECU 43 mainly includes a microcomputer, and receives signals detected by the sensors 31 to 38. Based on the signals, a central processing unit (CPU) of the ECU 43 performs computation according to a control program, initial data, a control map and the like which are stored in read only memory (ROM) as storing means, and performs various types of control based on the result of the computation. The computation result obtained by the CPU is temporarily stored in random access memory (RAM).

Examples of the various types of control are control of the clutch 14 (clutch control) performed through the control of an actuator 57 for a clutch, control for changing the shift speed of the transmission 15 performed through the control of the actuator 23 for a transmission, and control of an opening of the throttle valve 27 (throttle control) performed through the control of the motor 28.

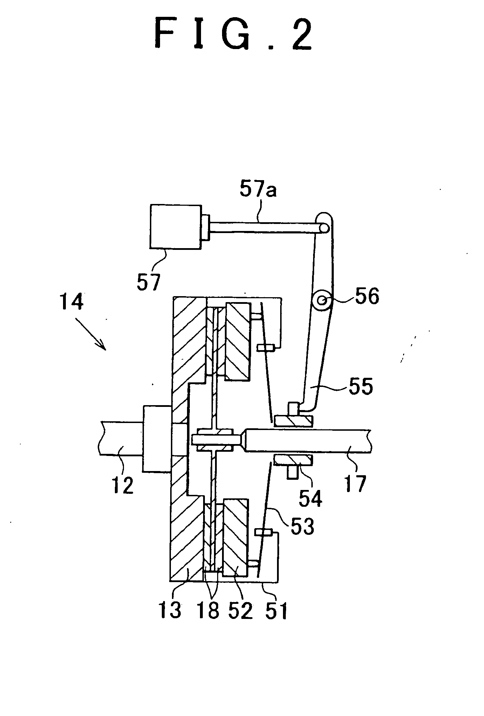

Next, a concrete configuration of the clutch 14 will be described with reference to FIG. 2. As shown in FIG. 2, a clutch cover 51 is attached to the flywheel 13 coupled with the crank shaft 12 so as to be rotatable integrally with the flywheel 13. The clutch disk 18 is spline-coupled with the input shaft 17 of the transmission 15. The clutch disk 18 can slide in the axial direction (the longitudinal direction in FIG. 2) while rotating integrally with the input shaft 17.

A pressure plate 52 is provided between the clutch disk 18 and the clutch cover 51. The pressure plate 52 is pressed to the flywheel 13 side by an outer end portion of a diaphragm spring 53. Due to the pressing, a frictional force is generated between the clutch disk 18 and the pressure plate 52, and between the flywheel 13 and the clutch disk 18. Due to the frictional force, the clutch 14 is engaged, and the flywheel 13, the clutch disk 18 and the pressure plate 52 integrally rotate. Thus, power is transmitted from the power plant 11 to the transmission 15. The torque to be transmitted from the power plant 11 to the transmission 15 via the clutch 14 due to the power transmission is referred to as "clutch torque". The clutch torque is substantially "0" when the clutch 14 is disengaged. The clutch torque is increased as the clutch 14 is gradually engaged and slip of the clutch disk 18 is decreased. Finally, when the clutch 14 is completely engaged, the clutch torque is equal to the rotational torque of the crank shaft 12.

Meanwhile, the operation for engaging/disengaging the clutch 14, which is performed when the vehicle 10 is started or the shifting of the transmission 15 is performed, is performed automatically by the automatic clutch mechanism based on the engine speed NE and the like.

The automatic clutch mechanism will be described. A release bearing 54 for adjusting a degree of the power transmission or for interrupting the power transmission is attached to the input shaft 17 so as to be slidable in the axial direction of the input shaft 17. A release fork 55 which is rotatably supported by a shaft 56 is provided near the release bearing 54, and an end portion (a lower end portion in FIG. 2) of the release fork 55 contacts the release bearing 54. To the other end portion (an upper end portion in FIG. 2) of the release fork 55, a piston 57a of the actuator 57 for a clutch including an electric motor and the like is connected.

When the actuator 57 for a clutch is driven, and the piston 57a is moved such that the piston 57a further protrudes from the actuator 57, the release fork 55 rotates in a clockwise direction, and the release bearing 54 is pressed to the flywheel 13 side. When the release bearing 54 moves to the flywheel 13 side, the inner end portion of the diaphragm spring 53, that is, the end portion of the diaphragm spring 53 which contacts the release bearing 54 is deformed elastically to the flywheel 13 side. As a result, the pressing force of the pressure plate 52 due to the diaphragm spring 53 is reduced, and the frictional force is reduced. Thus, the clutch 14 is disengaged.

In the embodiment, the relationship between the stroke amount of the piston 57a and the engagement state of the clutch 14 is as follows. The position of the piston 57a when the clutch 14 is disengaged is referred to as the reference position "0". As the stroke amount st increases, the amount of the protrusion of the piston 57a from the actuator 27 is reduced, and the clutch 14 is engaged gradually.

In the clutch 14 according to the embodiment, the frictional force is changed according to the driving amount of the actuator 57 for a clutch, that is the stroke amount st of the piston 57a. The stroke amount st is adjusted by the ECU 43 based on the engine speed NE and the like. During the clutch control when the vehicle 10 is started normally, driving of the actuator 57 for a clutch is basically controlled as follows.

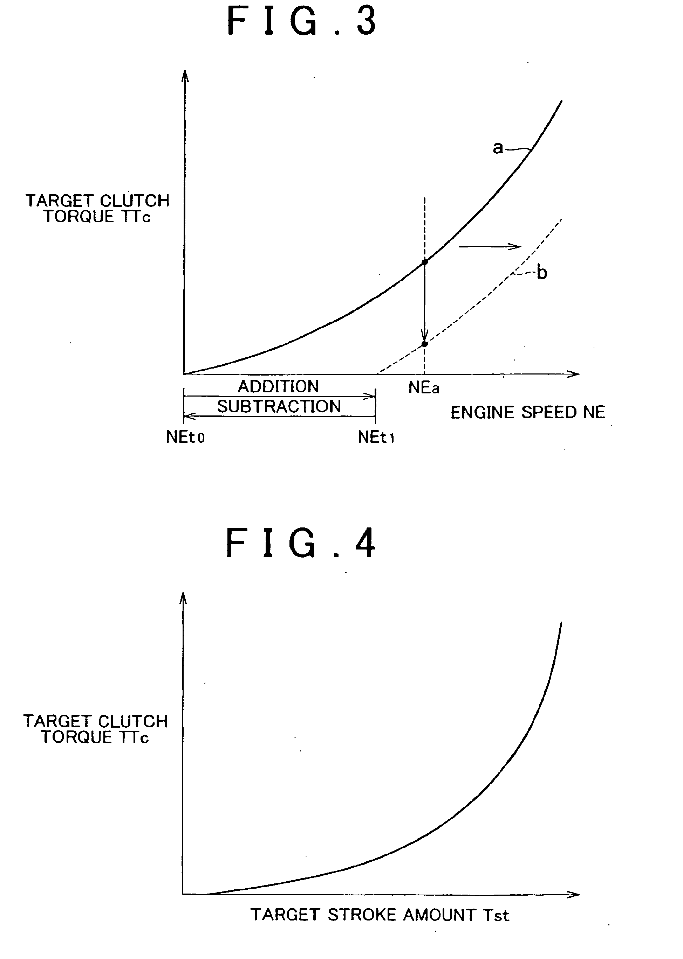

The target clutch torque TTc is calculated based on the engine speed NE. When the target clutch torque TTc is calculated, a map shown in FIG. 3 is referred to. The map is prepared based on an experiment and the like, and is stored in the ECU 43 in advance. In the map, as shown by a solid line a, the target torque TTc is set to increase with an increase in the engine speed NE. Namely, with an increase in the engine speed NE, slip of the clutch disk 18 is set to decrease and the driving force TR to be transmitted from the crank shaft 12 to the input shaft 17 is set to increase. When the engine speed NE is lower than a reference engine speed NEt0 for a normal start, the target clutch torque TTc is set to "0". When the engine speed NE becomes equal to or higher than the reference engine speed NEt0 for a normal start, the target clutch torque TTc becomes larger than "0", and the clutch 14 is engaged. In the embodiment, the reference engine speed NEt0 for a normal start is set to an engine speed which is slightly higher than the idling speed. The relationship between the engine speed NE and the target clutch torque TTc is obtained through an experiment and the like such that the disengaged clutch 14 is engaged efficiently and according to the intention of the driver.

Next, a target stroke amount Tst of the actuator 57 for a clutch is calculated based on the thereby calculated target clutch torque TTc. When the target stroke amount Tst is calculated, a map shown in FIG. 4 is referred to. The map is prepared by an experiment and the like, and is stored in the ECU 43 in advance. In the map, the target stroke amount Tst is set to increase with an increase in the target clutch torque TTc.

Due to calculation of the target clutch torque TTc and the target stroke amount Tst, the driving force TR of the input shaft 17 is increased with an increase in the engine speed NE.

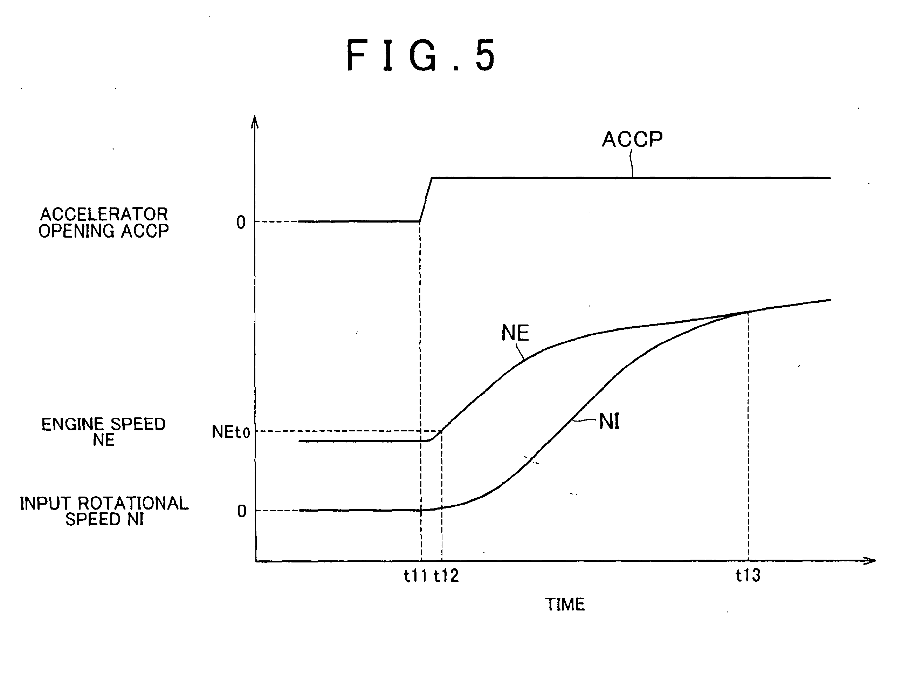

Next, with reference to the timing chart shown in FIG. 5, a description will be made on progressions of the accelerator opening ACCP, the engine speed NE and the input rotational speed NI when the clutch control is performed.

At timing t11 in FIG. 5, all the following conditions are satisfied.

(a) The first speed is selected as a shift speed of the transmission 15.

(b) The accelerator opening ACCP is "0".
(c) The vehicle speed SPD is "0".

At timing t11, when the accelerator pedal 26 is depressed, and the accelerator opening ACCP is increased, the engine speed NE starts to increase. When the engine speed becomes equal to or higher than the reference engine speed NEt0 for a normal start (timing t12), the value of the target clutch torque TTc starts to increase, and the stroke amount st of the piston 57a increases with an increase in the target clutch torque TTc. As a result, the clutch 14 starts to switch from the engagement state to disengagement state.

Then, the stroke amount st of the piston 57a increases with an increase in the engine speed NE, and the clutch 14 is further engaged. Therefore, the input rotational speed NI is gradually increased from timing t12, and the difference between the input rotational speed NI and the engine speed NE is decreased. When the clutch 14 is completely engaged (at timing t13), the engine speed NE and the input rotational speed NI become equal to each other.

Thus, in the control apparatus for an automatic clutch mechanism according to the embodiment, when the accelerator pedal 26 is depressed in the engine idling state and the engine speed NE becomes equal to or higher than the reference engine speed NEt0 for a normal start, engagement of the clutch 14 is started. Then, the clutch 14 is further engaged automatically with an increase in the engine speed NE. Accordingly, it is possible to start the vehicle smoothly only through the accelerator operation.

When the vehicle 10 is started normally, as mentioned above, for example, when the vehicle 10 is stopped on a flatland and then started, engagement of the clutch 14 is started when the engine speed NE becomes slightly higher than the idling speed.

Meanwhile, even in the state where a request for a snap start of the vehicle 10 has been made by the driver, that is, the state where the load placed on the vehicle during the vehicle start is high, when engagement of the clutch 14 is preformed in the above-mentioned manner, engagement of the clutch 14 is started from the engine speed at which the required engine output torque cannot be obtained sufficiently. Therefore, there is a possibility the vehicle cannot be started in a manner reflecting the intention of the driver.

Accordingly, in the control apparatus for an automatic clutch mechanism according to the embodiment, it is determined whether there is a request for a snap start of the vehicle 10 based on the operation amount of the accelerator pedal 26 and the degree of the change in the operation amount of the accelerator pedal 26. When it is determined that there is a request for a snap start, the engine speed NE is increased by a predetermined degree, and then control for starting engagement of the clutch 14 (snap start control) is performed. More particularly, the engine speed at which engagement of the clutch 14 is started (the reference engine speed NEtn) is set so as to be variable.

The driving torque to be transmitted from the power plant 11 to the driving wheel 22 side via the clutch 14 is equal to the total sum of the output torque of the power plant 11 and the torque due to the inertia force of the clutch 14 in the power plant 11 side. The more abruptly the rotational speed of the clutch 14 in the power plant 1 side is decreased, the larger the amount of the inertia force to be transmitted to the driving wheel 22 side via the clutch 14 becomes. Accordingly, in the embodiment, by intentionally decreasing the rotational speed of the clutch 14 in the power plant 11 side after engagement of the clutch 14 is started, the inertia force is efficiently used as part of the driving force TR.

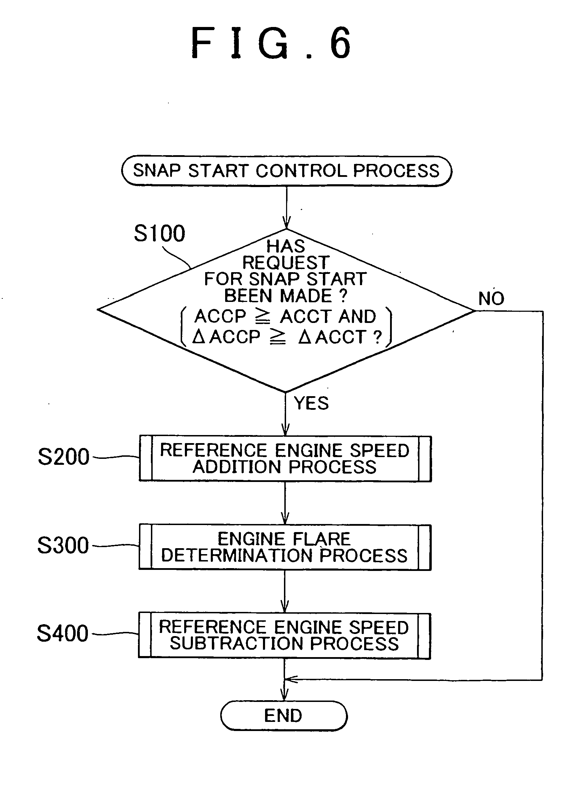

The snap start control performed by the control apparatus for an automatic clutch mechanism according to the embodiment will be described with reference to FIGs. 6 to 9. FIG. 6 shows the routine of the snap start control performed by the ECU 43.

When the process is started, it is initially determined whether a request for a snap start has been made (S100). In this case, when both the equations (1) and (2) are satisfied, it is determined that a request for a snap start has been made.

$$\text{Accelerator opening ACCP} \geq \text{snap start determination opening ACCT} \ldots(1)$$

In this case, the snap start determination opening ACCT is a value for determining the accelerator operation amount when a request for a snap start of the vehicle 10 has been made by the driver, that is, the accelerator opening ACCP. The snap start determination opening ACCT is obtained by experiment or the like in advance. The snap start determination change amount $\Delta$ACCT is a value for determining the degree of the change in the accelerator opening ACCP when a request for a snap start of the vehicle 10 has been made by the driver, that is, the accelerator opening change amount $\Delta$ACCP which is the amount of the change in the accelerator opening ACCP. The snap start determination change amount $\Delta$ACCT is obtained by experiment or the like in advance.

When it is determined that a request for a snap start has not been made ("NO" in S100), the process temporarily ends, and the clutch control for a normal start is performed. On the other hand, when it is determined that a request for a snap start has been made ("YES" in S100), the snap start control, which will be described in S200 to S400, is performed.

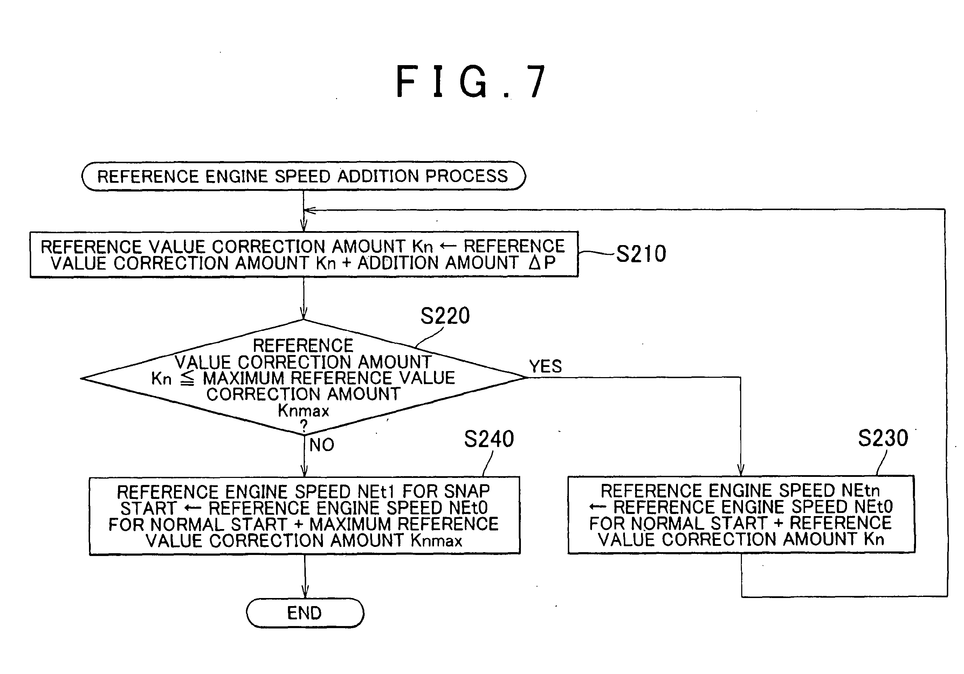

First, the reference engine speed addition process for gradually increasing the reference engine speed NEt0 for a normal start to the reference engine speed NEt1 for a snap start is performed (S200). The reference engine speed addition process will be described in detail in FIG. 7.

First, an addition amount $\Delta P$ is added to the reference value correction amount Kn for the previous routine, and the reference value correction amount Kn for the present routine is set to the result of the addition (S210). The initial value of the reference value correction amount Kn is "0". The addition amount $\Delta P$ is a fixed value, and is set to a value at which the deceleration shock, that occurs when the vehicle start control is switched to the snap start control during the vehicle start, can be suppressed. The state where the deceleration shock occurs will be described later.

Next, it is determined whether the reference value correction amount Kn is equal to or smaller than a maximum reference value correction amount Knmax (S220). The maximum reference value correction amount Knmax is a maximum correction amount which is set according to the degree of the request for a snap start obtained based on the accelerator opening ACCP and the accelerator opening change amount $\Delta$ACCP, and is obtained from a map which is stored in the ECU 43 in advance. In the map, as the degree of the request for a snap start is raised, the maximum reference value correction amount Knmax is set to a larger value. When the reference value correction amount Kn is equal to or smaller than the maximum reference value correction amount Knmax ("YES" ins S220), the present reference value correction amount Kn is added to the reference engine speed NEt0 for a normal start, and the reference engine speed NEtn for the present routine is set to the result of the addition (S230). Then, the process in S210 is repeatedly performed until the reference value correction amount Kn exceeds the maximum reference value correction amount Knmax. Therefore, the reference value correction amount Kn increases in increments of the addition amount $\Delta P$. As a result, the reference engine speed NEtn also increases in increments of the addition amount $\Delta P$.

When the reference value correction amount Kn, which increases every time an affirmative determination is made in S220, exceeds the maximum reference value correction amount Knmax ("NO" in S220), the maximum reference value correction amount Knmax is added to the reference engine speed NEt0 for a normal start, and the reference engine speed NEt1 for a snap start is set to the result of the addition (S230). Then, the reference engine speed addition process ends.

By performing the addition process shown in FIG. 7, as shown by a dashed line b in FIG. 3, the reference engine speed NEtn is gradually increased from the reference engine speed NEt0 for a normal start, and comes close to the reference engine speed NEt1 for a snap start. As the reference engine speed NEtn is thus increased, the target clutch torque TTc at a certain engine speed NEa is decreased, and the target stroke amount Tst is also decreased. Therefore, even at the same engine speed, in accordance with the increase in the reference engine speed NEtn, the engaged clutch 14 is disengaged. In this case, since the load which interrupts the increase in the engine speed NE is reduced, the increase rate of the engine speed increases.

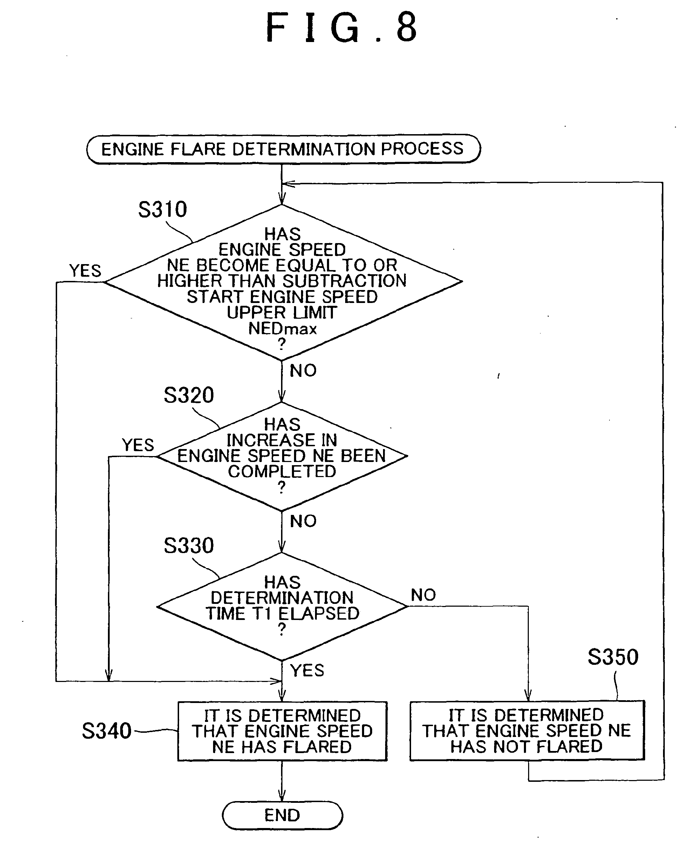

When the reference engine speed NEtn is thus increased to the reference engine speed NEt1 for a snap start, an engine flare determination process is performed so as to determine whether the engine speed NE has flared (S300 in FIG. 6). FIG. 8 shows the details of the engine flare determination process.

First, it is determined whether the engine speed NE becomes equal to or higher that a subtraction start engine speed upper limit NEDmax (S310). The subtraction start engine speed upper limit NEDmax is obtained by an experiment or the like in advance such that the inertia force of the clutch 14 in the power plant 11 side becomes the optimum value for a snap start. Namely, the inertia force increases with an increase in the engine speed NE. However, when the engine speed NE excessively increases, the driving force TR also excessively increases, which causes, for example, idle running of the driving wheels 22. Therefore, the subtraction start engine speed upper limit NEXmax is set to the maximum engine speed at which such a trouble does not occur. When the engine speed NE becomes equal to or higher than the subtraction start engine speed upper limit NEDmax ("YES" in S310), it is determined that the engine speed has flared sufficiently to be able to obtain enough inertia force (S340), afterwhich the process ends.

On the other hand, when the engine speed NE is lower than the subtraction start engine speed upper limit NEDmax ("NO" in S310), it is determined whether an increase in the engine speed NE has been completed (S320). In this case, when all the following equations (3) to (5) are satisfied, it is determined that the increase in the engine speed NE had been completed.

$$\text{Engine speed NE} \geq \text{subtraction start engine speed NED} \dots (3)$$

$$\text{Engine speed change amount } \Delta\text{NE} < \text{subtraction start change amount } \Delta\text{NED} \dots (4)$$

$$\text{Time in which the equation (4) is continuously satisfied} \geq \text{subtraction start determination time DT1} \dots (5)$$

In this case, the subtraction start engine speed NED is calculated based on the accelerator opening ACCP, and is used for determining whether the engine speed NE has flared sufficiently to be able to obtain enough inertia force. The subtraction start change amount $\Delta$NED is used for determining the degree of the decrease in the change amount of the engine speed NE, that is, the degree of the decrease in the increase rate. Also, the subtraction start determination time DT1 is used such the temporary fluctuation of the engine speed NE is not detected as the decrease in the change amount of the engine speed NE during the engine flare.

When it is determined that the increase in the engine speed NE has been completed ("YES" in S320), it is determined that the engine speed NE has flared sufficiently to be able to obtain enough inertia force (S340), afterwhich the process ends.

On the other hand, when it is determined that the increase in the engine speed NE has not been completed ("NO" in S320), it is determined whether the determination time T1 has elapsed since the reference engine speed addition process is started (S330). The determination time T1 is used for determining whether the engine speed NE, which rapidly increases due to the start of the reference engine speed addition process (S200), has increased to an engine speed at which the inertia force can be obtained sufficiently. The determination time T1 is obtained by an experiment or the like in advance.

When it is determined that the determination time T1 has not elapsed since the reference engine speed addition process is started (S200) ("NO" in S330), it is determined that the engine speed NE has not flared sufficiently to be able to obtain enough inertia force (S350), afterwhich the process returns to S310. Then, S310 and the following steps are repeatedly performed until an affirmative determination is made in any one of S310, S320 and S330, that is, until when it is determined that the engine speed NE has flared.

On the other hand, when it is determined that the determination time T1 has elapsed since the reference engine speed addition process (S200) is started ("YES" in S330), it is determined that the engine speed NE has flared sufficiently to be able to obtain enough inertia force (S340), afterwhich the process ends.

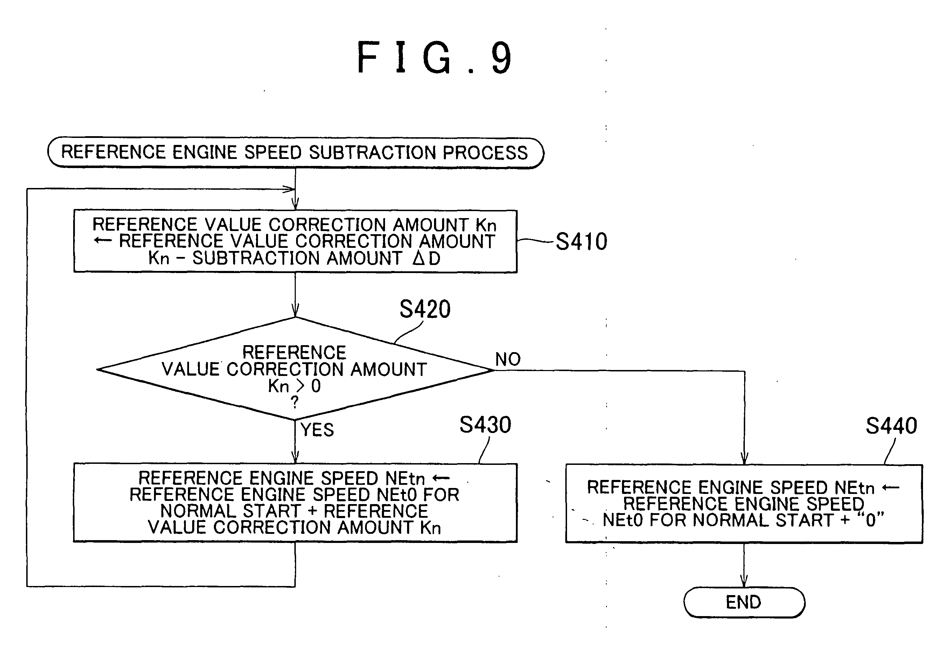

When it is determined that the engine speed NE has flared, the reference engine speed subtraction process (S400 in FIG. 6) for gradually decreasing the increased reference engine speed NEtn to the original reference engine speed NEt0 for a normal start is performed. FIG. 9 shows the details of the reference engine speed subtraction process.

First, the subtraction amount $\Delta$D is subtracted from the reference value correction amount Kn for the previous routine, and the reference value correction amount Kn for the present routine is set to the result of the subtraction (S410). Since the reference engine speed addition process (S200) is preformed before the routine is performed, the value of the reference value correction amount Kn when the routine is initially performed is set to the maximum reference value correction amount Knmax. The subtraction amount $\Delta$D is obtained according to the following equation (6).

$$\text{Subtraction amount } \Delta D = \text{reference value correction subtraction amount DB} + \text{subtraction correction amount DF} \dots (6)$$

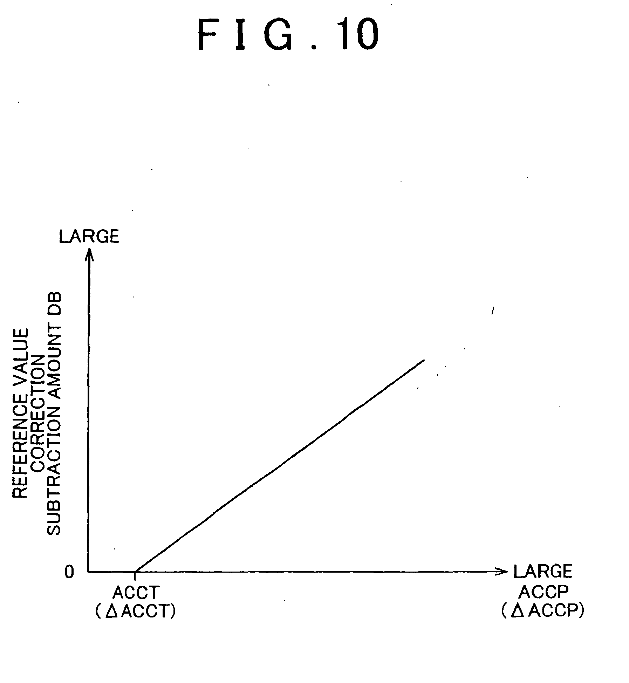

In this case, the reference value correction subtraction amount DB is a value which is set according to the map shown in FIG. 10, that is stored in the ECU 43 in advance. As shown in the map, the reference value correction subtraction amount DB is a correction amount whose value is set to increase as the accelerator opening ACCP increases with respect to the accelerator opening ACCP, or as the accelerator opening change amount $\Delta$ACCP increases with respect to the accelerator opening change amount $\Delta$ACCP. The subtraction correction amount DF is a value which is set according to the accelerator opening ACCP, and is calculated based on the deviation between the target decrease rate of the engine speed at which the inertia force can be obtained and an excessive increase in the driving force TR can be suppressed, and the actual decrease rate of the engine speed NE.

Next, it is determined whether the reference value correction amount Kn is larger than "0" (S420). When it is determined that the reference value correction amount Kn is larger than "0" ("YES" in S420), the present reference value correction amount Kn is added to the reference engine speed NEt0 for a normal start, and the reference engine speed NEtn for the present routine is set to the result of the addition (S430), afterwhich the process returns to S410. The process in S410 is repeatedly performed until the reference value correction amount Kn becomes equal to or smaller than "0". Thus, the reference value correction amount Kn is decreased in decrements of the subtraction amount $\Delta$D,

and the reference engine speed NEtn is also decreased in decrements of the subtraction amount ∆D.

On the other hand, when the reference value correction amount Kn, which is decreased every time an affirmative determination is made in S420, becomes equal to or smaller than "0" ("NO" in S420), "0" is added to the reference engine speed NEt0 for a normal start, and the reference engine speed NEtn is set to the result of the addition (S440). Thus, the reference engine speed NEtn is actually returned to the reference engine speed NEt0 for a normal start which is the original reference engine speed, afterwhich the reference engine speed subtraction process ends.

Due to the subtraction process shown in FIG. 9, the reference engine speed NEt1 for a snap start is gradually returned to the reference engine speed NEt0 for a normal start. Namely, the dashed line b shown in FIG. 3 is changed so as to be closer to the solid line a. As the reference engine speed NEtn is decreased, the target clutch torque TTc at the engine speed NEa is increased, and the target stroke amount Tst is also increased. Therefore, even at the same engine speed, in accordance with the decrease in the reference engine speed NEtn, the disengaged clutch 14 is further engaged. In this case, since the load for interrupting the increase in the engine speed NE is increased, the engine speed NE is rapidly decreased.

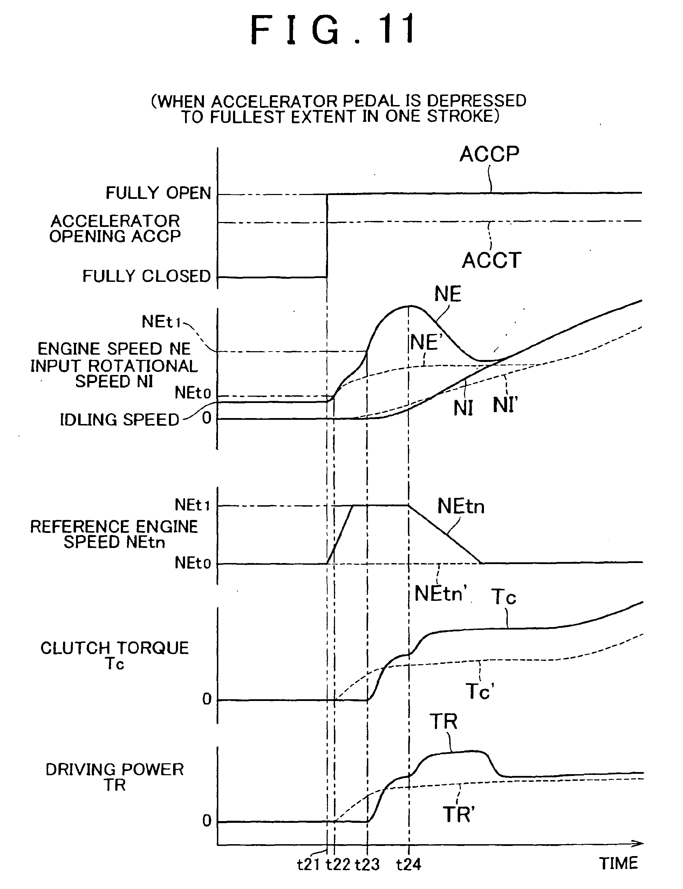

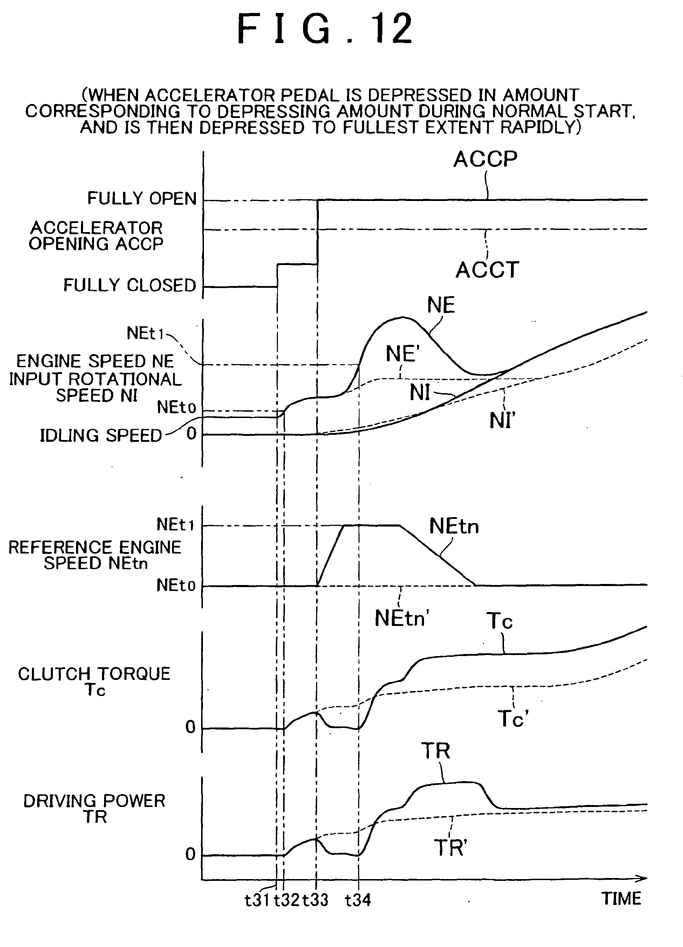

When the reference engine speed NEt1 for a snap start becomes equal to the reference engine speed NEt0 for a normal start, the snap start control process shown in FIG. 6 ends. Next, the effect of the snap start control process according to the embodiment will be described with reference to timing charts in FIGs. 11 and 12. The timing charts show progression of the accelerator opening ACCP, the engine speed NE, the input speed NI, the reference engine speed NEtn, the clutch torque Tc and the driving force TR.

The FIG. 11 shows an example of the snap start control process when the accelerator pedal 26 is fully depressed in one stroke, that is, when the accelerator pedal 26 is rapidly depressed such that the accelerator opening is rapidly changed from the "fully closed" state to the "fully open" state. FIG. 12 shows an example of the snap start control process when the accelerator pedal 26 is depressed in an amount corresponding to that during a normal start, an then is rapidly depressed to the "fully open" state.

In FIGs. 11 and 12, a dashed line shown by a sign with "'" shows the progression of each parameter when the snap start control process is not performed. First, the snap start control process when the accelerator pedal 26 is fully depressed in one stroke will be described. In the example shown in FIG. 11, all the following conditions are satisfied at timing t21.

(a) The first speed is selected as the shift speed of the transmission 15.
(b) The accelerator opening ACCP is "0" (fully closed).
(c) The vehicle speed is "0".

At timing t21, when the accelerator pedal 26 is depressed in a large amount, and the accelerator opening ACCP becomes equal to or larger than the snap start determination opening ACCT, and also the accelerator opening change amount ∆ACCP becomes equal to or larger than the snap start determination change amount ∆ACCT, it is determined that a request for a snap start has been made, as mentioned above. Then, the control state of the clutch 14 is switched from the normal start control to the snap start control. Therefore, the reference engine speed NEt0 for a normal start starts to increase and comes close to the reference engine speed NEt1 for a snap start. At this time, the engine speed NE also starts to increase. However, the increase in the reference engine speed NEtn is more prompt than the increase in the engine speed NE. Accordingly, there is no possibility that the engine speed NE becomes equal to or higher than the reference engine speed NEtn. Engagement of the clutch 14 is not started. At this time, the engine speed NE rapidly increases since the load for interrupting the increase is low, although the increase rate of the engine speed NE is lower than the increase rate of the reference engine speed NEtn.

In the case where the snap start control is not performed, when the engine speed NE becomes slightly higher than the idling speed and reaches the reference engine speed NEt0 for a normal start (timing t22), engagement of the clutch 14 is started.

When the engine speed NE becomes equal to or higher than the reference engine speed NEt1 for a snap start at timing t23, the value of the target torque TTc starts to increase, and the stroke amount st of the piston 57a increases in accordance with the increase in the value of the target clutch torque TTc. Thus, engagement of the disengaged clutch 14 is started. Therefore, the input speed NI, the clutch torque Tc and the driving force TR start to increase.

Then, at timing t24, when the increase in the engine speed NE is completed, the value of the reference engine speed NEt1 for a snap start starts to decrease, and comes close to the reference engine speed NEt0 for a normal start. At this time, as mentioned above, the target clutch torque TTc at a certain engine speed is increased with a decrease in the reference engine speed NEtn, and the target stroke amount Tst increases. Therefore, the load for interrupting the increase in the engine speed NE increases, and the engine speed NE, that is, the rotational speed of the clutch 14 in the power plant 11 side is rapidly decreased. Accordingly, not only the output torque of the power plant 11, but also the inertia force of the clutch 14 in the power plant 11 side, that is, the inertia force of the member which rotates integrally with the crankshaft 12 is transmitted to the driving wheel 22 side of the clutch 14, that is, the input shaft 17. Accordingly, as shown in FIG. 11, although the engine speed NE is decreased for a moment after timing t24, the clutch torque Tc is becomes higher than that when the snap start control process is not performed, and the driving force TR becomes larger than that when the snap start control process is not performed.

Next, with reference to FIG. 12, a description will be made on the example of the snap start control process when the accelerator pedal 26 is depressed in an amount corresponding to that during a normal start, an then is depressed to the fullest extent in one stroke. In the example shown in FIG. 12, at timing t31, the same conditions as those at timing t21 are all satisfied.

At timing t31, when the accelerator is depressed in an amount corresponding to that during a normal start, that is, when the accelerator opening ACCP is smaller than the snap start determination change amount ACCT, or when the accelerator opening change amount ΔACCP is smaller than the snap start determination change amount ΔACCT, the clutch control for a normal start is performed. In this case, the reference engine speed NEtn is not increased. When the engine speed NE reaches the reference engine speed NEt0 for a normal start which is slightly higher than the idling speed (timing t32), engagement of the clutch 14 is started. Therefore, the input speed NI, the clutch torque Tc and the driving force TR start to increase at timing t32.

After that, at timing t33, when the accelerator pedal 26 is depressed to the fullest extent in one stroke, the clutch control is switched from the clutch control for a normal start to the clutch control for a snap start, and the increase in the reference engine speed NEtn is started. Unlike the process shown in FIG. 11, in the process shown in FIG. 12, when the accelerator pedal 26 is depressed to the fullest extent in one stroke (timing t33), engagement of the clutch 14 has already been started. Therefore, when the increase in the reference engine speed NEtn is started, and the target stroke amount Tst corresponding to the engine speed NE is decreased, engagement of the clutch 14, which has already been started, is cancelled, and disengagement of the engaged clutch 14 is started. Since the load for interrupting the increase in the engine speed NE is reduced, the engine speed NE rapidly increases, although the increase rate is lower than the increase rate shown in FIG. 11. In accordance with disengagement of the clutch 14 due to the start of the increase in the reference engine speed NEtn, the clutch torque Tc and the driving force TR decrease temporarily. When the clutch torque Tc and the driving force TR decrease abruptly, a deceleration shock is generated in the vehicle 10. However, in the embodiment, the reference engine speed NEtn is increased gradually. Therefore, the clutch 14 is gradually disengaged, which makes it possible to suppress the abrupt decrease in the clutch torque Tc and the driving force TR.

When the reference engine speed NEt0 for a normal start is increased to the reference engine speed NEt1 for a snap start, and the engine speed NE flares to the reference engine speed NEt1 for a snap start (timing t34), engagement of the clutch 14 is started again. The effect obtained after timing t34 is the same as the effect obtained after timing t23.

As described so far, according to the embodiment, the following effects can be obtained.

(1) It is determined whether a request for a snap start has been made based on the accelerator opening ACCP and the accelerator opening change amount ΔACCP. When it is determined that a request for a snap start has been made, the engine speed (the reference engine speed NEtn) at which engagement of the clutch 14 is started is increased to the reference engine speed NEt1 for a snap start. Accordingly, when the request for a snap start has been made, engagement of the clutch 14 is started at the engine speed NE which is higher the engine speed at which engagement of the clutch 14 is started when the request for a snap start has not been made. It is possible to perform engagement of the clutch 14 corresponding to degree of the request for a snap start only through the operation of the accelerator pedal 26. Accordingly, it is possible to make a snap start of the vehicle 10 with a simple operation.

(2) The vehicle start control is switched between the snap start control and the normal start control only through the operation of the accelerator pedal 26. Therefore, it is possible to switch the vehicle start control from the normal start to the snap start, or from the snap start to the normal start easily and immediately. Accordingly, it is possible to reflect the intention of the driver on the driving state of the vehicle promptly.

(3) The reference engine speed NEt1 for a snap start starts to decrease after engagement of the clutch 14 is started. Therefore, not only the output torque of the power plant 11 but also the inertia force of the clutch 14 in the power plant 11 side can be used as the driving force TR. Accordingly, it is possible to increase the driving torque to be transmitted from the power plant 11 to the driving wheel 22 side of the clutch 14 during the vehicle start. As a result, it is possible to make a snap start of the vehicle 10 appropriately.

(4) The reference engine speed NEt1 for a snap starts to decrease when the engine speed NE becomes equal to or higher than the subtraction start engine speed upper limit NEDmax. Therefore, it is possible to suppress an excessive increase in the inertia force. Accordingly, it is possible to obtain stability of the vehicle 10.

(5) Also, the reference engine speed for a snap start starts to decrease when the increase in the engine speed NE is completed. Accordingly, the decrease in the reference engine speed NEt1 for a snap start is started from the state where the engine speed NE is high. Therefore, it is possible to effectively use the inertia force as the driving force TR.

(6) As mentioned above, the more abruptly the engine speed NE is decreased, the larger the amount of the inertia force to be transmitted to the driving wheel 22 side of the clutch 14 becomes. However, when the engine speed NE is decreased abruptly, the inertia force to be added to the driving force TR excessively increases, which raises a possibility that, for example, idle running of the driving wheels occurs. However, in the embodiment, the reference engine speed NEt1 for a snap start is decreased gradually. Therefore, it is possible to suppress an excessive increase in the inertia force. As a result, it is possible to obtain stability of the vehicle 10.

(7) As mentioned above, as the degree of the decrease in the engine speed NE increases, the inertia force increases. The degree of the decrease in the engine speed NE increases with an increase in the degree of decrease in the reference engine speed NEt for a snap start. Namely, there is a correlation between the amount of the inertia force to be added to the driving force TR and the degree of the decrease in the reference engine speed NEtn. The decrease amount $\Delta D$, which is used as the index for showing the degree of the decrease in the reference engine speed NEtn, that is the decrease rate of the reference engine speed NEtn, is set according to the accelerator opening ACCP and the accelerator opening change amount $\Delta ACCP$, that is, according to the degree of the request for a snap start. Therefore, it is possible to appropriately obtain the driving force TR corresponding to the degree of the request for a snap start.

In the case where the vehicle is started normally, engagement of the clutch 14 is started when the engine speed NE become equal to or higher than the reference engine speed NEt0 for a normal start. When the reference engine speed NEtn is increased during a normal start, the reference engine speed NEtn becomes temporarily higher than the engine speed NE. Therefore, the clutch 14 is disengaged. At this time, if the clutch 14 is disengaged abruptly, power transmission from the power plant 11 to the driving wheels 22 is interrupted rapidly, which raises a possibility that a deceleration shock is generated in the vehicle 10. However, in the embodiment, when the reference engine speed is switched from the reference engine speed NEt0 for a normal start to the reference engine speed NEt1 for a snap start, the value is gradually increased. Accordingly, power transmission from the power plant 11 to the driving wheels 22 is gradually interrupted. Therefore, it is possible to appropriately suppress the deceleration shock in the vehicle 10, which is caused due to the change in the degree of the request during the vehicle start.

(9) As the reference engine speed NEtn increases, the engine speed NE when engagement of the clutch 14 is started increases, and the inertia force increases. However, in the embodiment, the maximum reference value correction amount Knmax, which is the increase amount of the reference engine speed Netn, is set according to the accelerator opening ACCP and the accelerator opening change amount $\Delta ACCP$, that is, according to the degree of the request for a snap start. Therefore, it is possible to appropriately obtain the driving force TR corresponding to the degree of the request for a snap start.

(10) Since the maximum reference value correction amount Knmax is thus set, the reference engine speed NEt1 for a snap start when the reference engine speed addition process is completed is a value corresponding to the accelerator opening ACCP and the accelerator opening change amount $\Delta ACCP$. Namely, the engine speed NE when engagement of the clutch 14 is started is the engine speed which is controlled by the ECU 43 while reflecting the intention of the driver. Accordingly, it is possible to stably make a snap start regardless of the skill of the driver. Also, it is possible to avoid a trouble that the engine speed is excessively increased by the driver, which causes breakage of the clutch 14. Further, the engine speed during engagement of the clutch can be obtained. Therefore, when the degree of the abrasion of the clutch disk or the like is estimated, it is possible to enhance the accuracy of the estimation.

(11) The reference engine speed NEt1 for a snap start is decreased to the reference engine speed NEt0 for a normal start. The reference engine speed NEt0 for a normal start is set to a value which is slightly higher than the idling speed. Accordingly, even when the reference engine speed NEt1 for a snap start is decreased to the reference engine speed NEt0 for a normal start, and therefore engagement of the clutch 14 further proceeds, and the engine speed NE is decreased, there is no possibility that the engine speed NE becomes lower than the idling speed. Therefore, it is possible to maintain the stable engine operation state.

The above-mentioned embodiment can be modified as follows.

(a) It may be determined that a request for a snap start has been made when at least one of the equation (1) and the equation (2) is satisfied. In this case, the effects similar to those in the above-mentioned embodiment can be obtained.

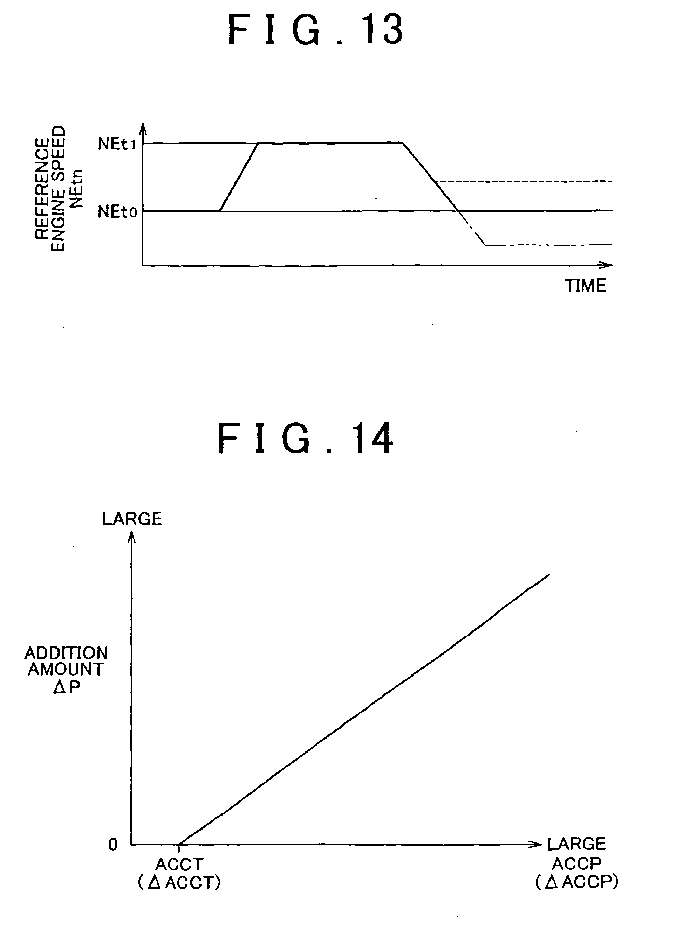

(b) The amount of the inertia force to be transmitted to the driving wheel side 22 may be adjusted according to a degree to which the reference engine speed NEt1 for a snap start is ultimately decreased. Namely, as shown by a dashed line in FIG. 13, when the reference engine speed NEt1 is decreased to a speed which is higher than the reference engine speed NEt0 for a normal start, the inertia force to be transmitted to the driving wheel 22 side is small compared with the case where the reference engine speed NEt1 for a snap start is decreased to the reference engine speed NEt0 for a normal start (corresponding to the embodiment), as shown by a solid line in FIG. 13. On the other hand, when the reference engine speed NEt1 for a snap start is decreased to a speed which is lower than the reference engine speed NEt0 for a normal start, as shown by a chain line in FIG. 13, the inertia force to be transmitted to the driving wheel 22 side is large compared with the case where the reference engine speed NEt1 for a snap start is decreased to the reference engine speed NEt0 for a normal start, as shown by a solid line in FIG. 13. As the decrease amount of the reference engine speed NEtn, that is, the ultimate decrease amount of the reference engine speed NEt1 for a snap start increases, the inertia force to be transmitted to the driving wheel 22 side increases. Therefore, the decrease amount may be changed according to the accelerator opening ACCP, the accelerator opening change amount ΔACCP, or the like. In this case, it is possible to appropriately obtain the driving force TR corresponding to the degree of the request for a snap start.

In the above-mentioned embodiment, the effect of gradually increasing the reference engine speed NEtn can be obtained when the vehicle start control is switched to the snap start control process while the vehicle is started with the clutch control during a normal start, as mentioned above. Accordingly, in the case where the snap start control process is performed from the beginning of the vehicle start, the maximum reference value correction amount Knmax may be added to the reference engine speed NEt0 for a normal start when the initial reference engine speed addition process is performed such that the reference engine speed NEtn is promptly switched to the reference engine speed NEt1 for a snap start. In this case, it is not necessary to perform the process for gradually adding the addition amount ΔP to the reference value correction amount Kn. Therefore, it is possible to reduce the load placed on the ECU 43.

In the above-mentioned embodiment, the addition amount ΔP used in the reference engine speed addition process may be a variable value instead of a fixed value. For example, as the addition amount ΔP becomes smaller, the increase rate of the reference engine speed NEtn decreases. Therefore, by changing the addition amount ΔP to a smaller value, it is possible to further reduce the deceleration shock which is likely to be caused when the vehicle start control is switched to the snap start control process during the clutch control for a normal start.

Meanwhile, as the increase rate of the reference engine speed NEtn is decreased, power transmission from the power plant to the driving wheels is interrupted more slowly, and the flare of the engine speed NE is delayed, which arises a possibility that the snap start of the vehicle 10 according to the intention of the driver cannot be made. Therefore, a map is prepared in which the addition amount ΔP is set to increase as the accelerator opening ACCP increases with respect to the snap start determination opening ACCT, or as the accelerator opening change amount ΔACCP increases with respect to the snap start determination change amount ΔACCT, as shown in FIG. 14. Referring to the map, the addition amount ΔP may be variably set according to the accelerator operation corresponding to the load placed on the vehicle. In this case, when the degree of the request for a snap start is low, power transmission from the power plant 11 to the driving wheels 22 is interrupted slowly. Accordingly, it is possible to appropriately suppress the deceleration shock. Meanwhile, when the degree of the request for a snap start is high, power transmission from the power plant 11 to the driving wheels 22 is interrupted promptly. Accordingly, the engine speed NE flares promptly, which makes it possible to make a snap start reflecting the intention of the driver.

In the above-mentioned embodiment, various values which are set according to the load placed on the vehicle may be set based on at least one of the accelerator opening ACCP and the accelerator opening change amount ΔACCP. In this case, the effect similar to that in the above-mentioned embodiment can be obtained.

Generally, when the vehicle which is stopped on a road whose inclination is large is started, the load placed on the vehicle is higher than that when the vehicle which is stopped on a flatland is started. Therefore, as shown by a dashed line in FIG. 1, an inclination sensor 39 for detecting an inclination of the road is provided in the vehicle 10. Various values which are set according to the load placed on the vehicle in the above-mentioned embodiment may be corrected so as to increase or decrease based on the result of the detection performed by the inclination sensor 39.

The load placed on the vehicle during the start when the laden weight has increased is higher than that during the start when the laden weight has not increased. Therefore, as shown by a dashed line in FIG. 1, a vehicle weight sensor 40 for detecting a weight of the vehicle 10 is provided in the vehicle 10. Various values which are set according to the load placed on the vehicle in the above-mentioned embodiment may be corrected so as to increase or decrease based on the result of the detection performed by the vehicle weight sensor 40.

Further, the inclination sensor 39 and the vehicle weight sensor 40 are provided in the vehicle 10. Then, the various values which are set according to the load placed on the vehicle may be corrected so as to increase or decrease based on the results of the detection performed by the inclination sensor 39 and the vehicle weight sensor 40.

In the above-mentioned cases, it is possible to further appropriately start the vehicle 10 according to the load placed on the vehicle during the start. In the reference engine speed subtraction process in FIG. 9, the reference engine speed NEtn may be decreased according to the following equation (7).

$$\text{Reference engine speed NEtn} = \text{reference engine speed NEt1 for a snap start} - \text{subtraction amount } \Delta D \ldots (7)$$

In this case, the same effect as that in the above-mentioned embodiment can be obtained.

The invention can be applied to a vehicle in which an acceleration operating element such as an accelerator lever is provided instead of the accelerator pedal 26.

The invention can be applied to a control device for an automatic clutch mechanism for a vehicle on which a power plant such as a gas turbine mechanism and an electric motor is mounted. Namely, the power plant is not limited to an internal combustion engine as long as the power plant can obtain output torque at which the vehicle 10 can be driven.

**Claims**

1. A control apparatus for an automatic clutch mechanism which permits/interrupts power transmission from a power plant (11), wherein a reference engine speed (NEtn) at which an engagement of the automatic clutch mechanism (14) is started is changed based on one of an accelerator operation amount (ACCP) and a degree of a change in the accelerator operation : amount (ΔACCP), wherein the engagement of the automatic clutch mechanism (14) is started when a rotational speed (NE) of the clutch mechanism (14) in the power plant (11)side becomes equal to or higher than the predetermined reference engine speed (NEtn) during a vehicle start, and wherein, when one of an accelerator operation amount (ACCP) and a degree of a change in the accelerator operation amount (ΔACCP) during the vehicle start is equal to or larger than a predetermined value (ACCT, ΔACCT), the reference engine speed (NEm) is made higher than the reference engine speed (NEtn) when one of the accelerator operation amount (ACCP) and the degree of change in the accelerator operation amount (ΔACCP) is smaller than the predetermined value (ACCT, ΔACCT), **characterized in that** the increased reference engine speed (NEtn) is decreased, after engagement of the automatic clutch mechanism (14) is started due to a fact that the rotational speed (NE) of the automatic clutch mechanism (14) in the power plant (11) side becomes equal to or higher than the increased reference engine speed (NEtn).

2. The control apparatus for an automatic clutch mechanism according to claim 1, **characterized in that** the decrease in the increased reference engine speed (NEtn) is started when an increase rate of the rotational speed of the automatic clutch mechanism (14) in the power plant (11) side becomes lower than a predetermined value after engagement of the automatic clutch mechanism (14) is started.

3. The control apparatus for an automatic clutch mechanism according to claim 1, **characterized in that** the decrease in the increased reference engine speed (NEtn) is started when the rotational speed (NE) of the automatic clutch mechanism (14) in the power plant (11) side becomes equal to or higher than a predetermined value (NEDmax) after engagement of the automatic clutch mechanism (14) is started.

4. The control apparatus for an automatic clutch mechanism according to any one of claims 1 through 3, **characterized in that** the increased reference engine speed (NEtn) is decreased gradually.

5. The control apparatus for an automatic clutch mechanism according to any one of claims 1 to 4, **characterized in that** a degree of the decrease in the increased reference engine speed (NEtn) is changed according to a degree of a load placed on the vehicle during the vehicle start.

6. The control apparatus for an automatic clutch mechanism according to claim 5, **characterized in that** the degree of the decrease in the reference engine speed (NEtn) is a decrease rate of the reference engine speed (NEtn).

7. The control apparatus for an automatic clutch mechanism according to claim 5, **characterized in that** the degree of the decrease in the reference engine speed (NEtn) is an amount of the decrease in the reference engine speed (NEtn).

8. The control apparatus for an automatic clutch mechanism according to any one of claims 1 through 6, **characterized in that** the reference engine speed (NEtn) is set to a value near an idling speed, and the increased reference engine speed (NEtn) is decreased until the reference engine speed (NEtn) becomes equal to an original reference engine speed (NEtn) which has not increased.

9. The control apparatus for an automatic clutch mechanism according to any one of claims 1 through 8, **characterized in that** the reference engine speed (NEtn) is increased gradually.

10. The control apparatus for an automatic clutch mechanism according to claim 9, **characterized in that** an increase rate of the reference engine speed (NEtn) to be increased is changed according to the degree of the load placed on the vehicle during the vehicle start.

11. The control apparatus for an automatic clutch mechanism according to any one of claims 1 through 10, **characterized in that** an amount of an increase in the reference engine speed (NEtn) to be increased is changed according to the degree of the load placed on the vehicle during the vehicle start.

12. The control apparatus for an automatic clutch mechanism according to any one of claims 5 to 7 and 10 to 11, **characterized in that** one of the accelerator operation amount (ACCP) and the degree of the change in the accelerator operation amount (ΔACCP) is used as the load placed on the vehicle.

13. The control apparatus for an automatic clutch mechanism according to claim 12, **characterized in that** at least one of an inclination of a road and a weight of the vehicle is used as the load placed on the vehicle, in addition to one of the accelerator operation amount (ACCP) and the degree of change in the accelerator operation amount (ΔACCP).

**Patentansprüche**

1. Steuervorrichtung für einen automatischen Kupplungsmechanismus, der die Leistungsübertragung von einer Leistungserzeugungseinrichtung (11) zulässt/unterbricht, wobei eine Bezugs-Maschinendrehzahl (NEtn), bei der eine Einrückung des automatischen Kupplungsmechanismus (14) begonnen wird, aufgrund entweder eines Beschleunigungselement-Öffnungsbetrags (ACCP) oder eines Änderungsumfangs des Beschleunigungselement-Öffnungsbetrags (ΔACCP) geändert wird, wobei die Einrückung des automatischen Kupplungsmechanismus (14) begonnen wird, wenn eine Drehzahl (NE) des Kupplungsmechanismus (14) auf der Seite der Leistungserzeugungseinrichtung (11) die vorgegebene Bezugs-Maschinendrehzahl (NEtn) während eines Startens des Fahrzeugs erreicht oder übertrifft, und wobei, wenn entweder der Beschleunigungselement-Öffnungsbetrag (ACCP) oder der Änderungsumfang des Beschleunigungselement-Öffnungsbetrags (ΔACCP) während des Startens des Fahrzeugs bei oder über einem vorgegebenen Wert (ACCT, ΔACCT) liegt, die Bezugs-Maschinendrehzahl (NEtn) höher gesetzt wird als die Bezugs-Maschinendrehzahl (NEtn), wenn entweder der Beschleunigungselement-Öffnungsbetrag (ACCP) oder der Änderungsumfang des Beschleunigungselement-Öffnungsbetrags (ΔACCP) kleiner ist als der vorgegebene Wert (ACCP, ΔACCP), **dadurch gekennzeichnet, dass** die erhöhte Bezugs-Maschinendrehzahl (NEtn) gesenkt wird, nachdem die Einrückung des automatischen Kupplungsmechanismus (14) begonnen wurde, weil die Drehzahl (NE) des automatischen Kupplungsmechanismus (14) auf der Seite der Leistungserzeugungseinrichtung (11) auf oder über die erhöhte Bezugs-Maschinendrehzahl (NEtn) steigt.

2. Steuervorrichtung für einen automatischen Kupplungsmechanismus nach Anspruch 1, **dadurch gekennzeichnet, dass** die Senkung der erhöhten Bezugs-Maschinendrehzahl (NEtn) begonnen wird, wenn eine Steigerungsrate der Drehzahl des automatischen Kupplungsmechanismus (14) auf der Seite der Leistungserzeugungseinrichtung (11) unter einen vorgegebenen Wert sinkt, nachdem die Einrückung des automatischen Kupplungsmechanismus (14) gestartet wurde.

3. Steuervorrichtung für einen automatischen Kupplungsmechanismus nach Anspruch 1, **dadurch gekennzeichnet, dass** die Senkung der erhöhten Bezugs-Maschinendrehzahl (NEtn) gestartet wird, wenn die Drehzahl (NE) des automatischen Kupplungsmechanismus (14) auf der Seite der Leistungserzeugungseinrichtung (11) auf oder über einen vorgegebenen Wert (NEDmax) steigt, nachdem mit der Einrückung des automatischen Kupplungsmechanismus (14) begonnen wurde.

4. Steuervorrichtung für einen automatischen Kupplungsmechanismus nach einem der Ansprüche 1 bis 3, **dadurch gekennzeichnet, dass** die erhöhte Bezugs-Maschinendrehzahl (Netn) allmählich gesenkt wird.

5. Steuervorrichtung für einen automatischen Kupplungsmechanismus nach einem der Ansprüche 1 bis 4, **dadurch gekennzeichnet, dass** der Umfang der Senkung der erhöhten Bezugs-Maschinendrehzahl (NEtn) gemäß dem Umfang einer Last, die während des Startens des Fahrzeugs an das Fahrzeug angelegt wird, geändert wird.

6. Steuervorrichtung für einen automatischen Kopplungsmechanismus nach Anspruch 5, **dadurch gekennzeichnet, dass** der Umfang der Senkung der Bezugs-Maschinendrehzah (NEtn) eine Senkungsrate der Bezugs-Maschinendrehzahl (NEtn) ist.

**7.** Steuervorrichtung für einen automatischen Kupplungsmechanismus nach Anspruch 5, **dadurch gekennzeichnet, dass** der Umfang der Senkung der Bezugs-Maschinendrehzahl (NEtn) ein Senkungsbetrag der Bezugs-Maschinendrehzahl (NEtn) ist.

**8.** Steuervorrichtung für einen automatischen Kupplungsmechanismus nach einem der Ansprüche 1 bis 6, **dadurch gekennzeichnet, dass** die Bezugs-Maschinendrehzahl (NEtn) auf einen Wert nahe der Leerlaufdrehzahl gesetzt wird, und dass die erhöhte Bezugs-Maschinendrehzahl (NEtn) gesenkt wird, bis die Bezugs-Maschinendrehzahl (NEtn) eine ursprüngliche Bezugs-Maschinendrehzahl (NEtn), die nicht erhöht wurde, erreicht.

**9.** Steuervorrichtung für einen automatischen Kupplungsmechanismus nach einem der Ansprüche 1 bis 8, **dadurch gekennzeichnet, dass** die Bezugs-Maschinendrehzahl (NEtn) allmählich erhöht wird.

**10.** Steuervorrichtung für einen automatischen Kupplungsmechanismus nach Anspruch 9, **dadurch gekennzeichnet, dass** eine Steigerungsrate der Bezugs-Maschinendrehzahl (NEtn), die geändert werden soll, entsprechend dem Umfang der Last, die während des Startens des Fahrzeugs an dem Fahrzeug angelegt wird, geändert wird.

**11.** Steuervorrichtung für einen automatischen Kupplungsmechanismus nach einem der Ansprüche 1 bis 10, **dadurch gekennzeichnet, dass** ein Steigerungsumfang der Bezugs-Maschinendrehzahl (NEtn), die erhöht werden soll, entsprechend dem Umfang der Last, die während des Startens des Fahrzeugs an dem Fahrzeug angelegt wird, geändert wird.

**12.** Steuervorrichtung für einen automatischen Kupplungsmechanismus nach einem der Ansprüche 5 bis 7 und 10 bis 11, **dadurch gekennzeichnet, dass** entweder der Beschleunigungselement-Öffnungsbetrag (ACCP) oder der Änderungsumfang des Beschleunigungselement-Öffnungsbetrags (ΔACCP) als Last, die an dem Fahrzeug angelegt wird, verwendet wird.

**13.** Steuervorrichtung für einen automatischen Kupplungsmechanismus nach Anspruch 12, **dadurch gekennzeichnet, dass** zusätzlich zu dem Bechleunigungselement-Öffnungsbetrag (ACCP) oder dem Änderungsumfang des Beschleunigungselement-Öffnungsbetrags (ΔACCP) die Neigung einer Straße und/oder ein Gewicht des Fahrzeugs als Last, die an dem Fahrzeug angelegt wird, verwendet werden.

**Revendications**

**1.** Dispositif de commande d'un mécanisme d'embrayage automatique qui permet/interrompt la transmission de puissance provenant d'un groupe motopropulseur (11), dans lequel un régime de moteur de référence (NEtn), auquel un embrayage du mécanisme d'embrayage automatique (14) est lancé, est modifié sur la base de l'un d'une quantité d'actionnement d'accélérateur (ACCP) et d'un degré de variation de la quantité d'actionnement d'accélérateur (ΔACCP), où l'embrayage du mécanisme d'embrayage automatique (14) est lancé lorsqu'une vitesse de rotation (NE) du mécanisme d'embrayage (14) dans le groupe motopropulseur (11) devient supérieure ou égale au régime de moteur de référence prédéterminé (NEtn) au cours d'un démarrage du véhicule, et dans lequel, lorsque l'un d'une quantité d'actionnement d'accélérateur (ACCP) et d'un degré d'une variation de la quantité d'actionnement d'accélérateur (ΔACCP) au cours du démarrage du véhicule, est supérieur ou égal à une valeur prédéterminée (ACCT, ΔACCP), le régime de moteur de référence (NEtn) devient supérieur au régime de moteur de référence (NEtn) lorsque l'un d'une quantité d'actionnement d'accélérateur (ACCP) et du degré de variation de la quantité d'actionnement d'accélérateur (ΔACCP) est inférieur à la valeur prédéterminée (ACCT, ΔACCT), **caractérisé en ce que** le régime de moteur de référence augmenté (NEtn) est diminué, après que l'embrayage du mécanisme d'embrayage automatique (14) a été lancé en raison,du fait que la vitesse de rotation (NE) du mécanisme d'embrayage automatique (14) du coté du groupe motopropulseur (11) devient supérieure ou égale au régime de moteur de référence augmenté (NEtn).

**2.** Dispositif de commande d'un mécanisme d'embrayage automatique selon la revendication 1, **caractérisé en ce que** la diminution du régime de moteur de référence augmenté (NEtn) est commencée lorsqu'un taux d'augmentation de la vitesse de rotation du mécanisme d'embrayage automatique (14) du coté du groupe motopropulseur (11) devient inférieur à une valeur prédéterminée après que l'embrayage du mécanisme d'embrayage automatique (14) a été lancé.

**3.** Dispositif de commande d'un mécanisme d'embrayage automatique selon la revendication 1, **caractérisé en ce**

**que** la diminution du régime de moteur de référence augmenté (NEtn) est commencée lorsque la vitesse de rotation (NE) du mécanisme d'embrayage automatique (11) du coté du groupe motopropulseur devient supérieure ou égale à une valeur prédéterminée (NEDmax) après que l'embrayage du mécanisme d'embrayage automatique (14) a été lancé.

4. Dispositif de commande d'un mécanisme d'embrayage automatique selon l'une quelconque des revendications 1 à 3, **caractérisé en ce que** le régime de moteur de référence augmenté (NEtn) est diminué progressivement.

5. Dispositif de commande d'un mécanisme d'embrayage automatique selon l'une quelconque des revendications 1 à 4, **caractérisé en ce qu'**un degré de la diminution du régime de moteur de référence augmenté (NEtn) est modifié conformément à un degré d'une charge placée sur le véhicule au cours du démarrage du véhicule.

6. Dispositif de commande d'un mécanisme d'embrayage automatique selon la revendication 5, **caractérisé en ce que** le degré d'augmentation de régime de moteur de référence (NEtn) représente un taux de diminution du régime de moteur de référence (NEtn).

7. Dispositif de commande d'un mécanisme d'embrayage automatique selon la revendication 5, **caractérisé en ce que** le degré de diminution du régime de moteur de référence (NEtn) est une valeur de la diminution du régime de moteur de référence (NEtn).

8. Dispositif de commande d'un mécanisme d'embrayage automatique selon l'une quelconque des revendications 1 à 6, **caractérisé en ce que** le régime de moteur de référence (NEtn) est établi à une valeur proche d'un régime de ralenti, et le régime de moteur de référence augmenté (NEtn) est diminué jusqu'à ce que le régime de moteur de référence (NEtn) devienne égal à un régime de moteur de référence d'origine (NEtn) qui n'a pas augmenté.

9. Dispositif de commande d'un mécanisme d'embrayage automatique selon l'une quelconque des revendications 1 à 8, **caractérisé en ce que** le régime de moteur de référence (NEtn) est progressivement augmenté.

10. Dispositif de commande d'un mécanisme d'embrayage automatique selon la revendication 9, **caractérisé en ce que** le taux d'augmentation du régime de moteur de référence (NEtn) devant être augmenté, est modifié conformément au degré de la charge placée sur le véhicule au cours du démarrage du véhicule.

11. Dispositif de commande d'un mécanisme d'embrayage automatique selon l'une quelconque des revendications 1 à 10, **caractérisé en ce qu'**une valeur d'augmentation de régime de moteur de référence (NEtn) devant être augmenté est modifiée conformément au degré de la charge placée sur le véhicule au cours du démarrage du véhicule.

12. Dispositif de commande d'un mécanisme d'embrayage automatique selon l'une quelconque des revendications 5 à 7 et 10 à 11, **caractérisé en ce que** l'un de la quantité d'actionnement d'accélérateur (ACCP) et du degré de variation de la quantité d'actionnement d'accélérateur (ΔACCP) est utilisé en tant que charge placée sur le véhicule.

13. Dispositif de commande d'un mécanisme d'embrayage automatique selon la revendication 12, **caractérisé en ce que** au moins l'un d'une inclinaison d'une route et d'un poids du véhicule est utilisé en tant que charge placée sur le véhicule, en plus de celui de la quantité d'actionnement d'accélérateur (ACCP) et du degré de variation de la quantité d'actionnement d'accélérateur (ΔACCP).

# F I G . 1

10

43

11a 27

POWER PLANT
11
12
13
57
18
14
15
17
23
32
32
19
20
21
22
28
37
38

ELECTRONIC CONTROL UNIT

VEHICLE SPEED SENSOR — 34

ROTATIONAL SPEED SENSOR — 35

INCLINATION SENSOR — 39

VEHICLE WEIGHT SENSOR — 40

26
36
25
24
31

# FIG.2

# FIG.3

TARGET CLUTCH
TORQUE TTc

ENGINE SPEED NE

ADDITION

SUBTRACTION

NEt0          NEt1

NEa

a

b

# FIG.4

TARGET CLUTCH
TORQUE TTc

TARGET STROKE AMOUNT Tst

# F I G . 5

ACCELERATOR
OPENING ACCP

ACCP

0

ENGINE SPEED
NE

NEt0

NE

INPUT ROTATIONAL
SPEED NI

0

NI

t11 t12

t13

TIME

EP 1 437 255 B1

# F I G . 6

SNAP START CONTROL PROCESS

S100

HAS
REQUEST
FOR SNAP START
BEEN MADE ?
$\left( \begin{array}{l} \text{ACCP} \geq \text{ACCT AND} \\ \Delta\text{ACCP} \geq \Delta\text{ACCT ?} \end{array} \right)$

NO

YES

S200 — REFERENCE ENGINE SPEED
ADDITION PROCESS

S300 — ENGINE FLARE
DETERMINATION PROCESS

S400 — REFERENCE ENGINE SPEED
SUBTRACTION PROCESS

END

23

# F I G . 7

EP 1 437 255 B1

```
      ( REFERENCE ENGINE SPEED ADDITION PROCESS )
                          │
                          ▼
   ┌───────────────────────────────────────────────┐
   │ REFERENCE VALUE CORRECTION AMOUNT Kn ← REFERENCE │──S210
   │ VALUE CORRECTION AMOUNT Kn + ADDITION AMOUNT ΔP  │
   └───────────────────────────────────────────────┘
                          │
                          ▼            S220
                   ╱REFERENCE╲
                 ╱ VALUE CORRECTION AMOUNT ╲   YES
               ◁  Kn ≦ MAXIMUM REFERENCE VALUE  ▷──────
                 ╲  CORRECTION AMOUNT  ╱
                   ╲   Knmax  ╱
                     ╲  ?  ╱
                      │NO                S240
                      ▼
```

REFERENCE VALUE CORRECTION AMOUNT $Kn \leftarrow$ REFERENCE VALUE CORRECTION AMOUNT $Kn$ + ADDITION AMOUNT $\Delta P$ — S210

REFERENCE VALUE CORRECTION AMOUNT $Kn \leqq$ MAXIMUM REFERENCE VALUE CORRECTION AMOUNT $Knmax$ ? — S220

**S240** — REFERENCE ENGINE SPEED $NEt1$ FOR SNAP START $\leftarrow$ REFERENCE ENGINE SPEED $NEt0$ FOR NORMAL START + MAXIMUM REFERENCE VALUE CORRECTION AMOUNT $Knmax$

**S230** — REFERENCE ENGINE SPEED $NEtn$ $\leftarrow$ REFERENCE ENGINE SPEED $NEt0$ FOR NORMAL START + REFERENCE VALUE CORRECTION AMOUNT $Kn$

( END )

# FIG.8

ENGINE FLARE DETERMINATION PROCESS

S310

HAS ENGINE SPEED NE BECOME EQUAL TO OR HIGHER THAN SUBTRACTION START ENGINE SPEED UPPER LIMIT NEDmax ?

YES

NO

S320

HAS INCREASE IN ENGINE SPEED NE BEEN COMPLETED ?

YES

NO

S330

HAS DETERMINATION TIME T1 ELAPSED ?

NO

YES

S350

S340

IT IS DETERMINED THAT ENGINE SPEED NE HAS FLARED

IT IS DETERMINED THAT ENGINE SPEED NE HAS NOT FLARED

END

# FIG.9

EP 1 437 255 B1

$$( \text{REFERENCE ENGINE SPEED SUBTRACTION PROCESS} )$$

REFERENCE VALUE CORRECTION AMOUNT Kn
← REFERENCE VALUE CORRECTION AMOUNT
Kn – SUBTRACTION AMOUNT $\Delta$D   —S410

S420

REFERENCE
VALUE CORRECTION AMOUNT
Kn > 0
?

NO

YES    S430

S440

REFERENCE ENGINE SPEED NEtn ←
REFERENCE ENGINE SPEED NEt0 FOR
NORMAL START + REFERENCE
VALUE CORRECTION AMOUNT Kn

REFERENCE ENGINE SPEED NEtn ←
REFERENCE ENGINE SPEED
NEt0 FOR NORMAL START + "0"

$$( \text{END} )$$

# F I G . 10

# FIG. 11

(WHEN ACCELERATOR PEDAL IS DEPRESSED
TO FULLEST EXTENT IN ONE STROKE)

# FIG.12

(WHEN ACCELERATOR PEDAL IS DEPRESSED IN AMOUNT CORRESPONDING TO DEPRESSING AMOUNT DURING NORMAL START, AND IS THEN DEPRESSED TO FULLEST EXTENT RAPIDLY)

# FIG.13

# FIG.14